# EUROPEAN PATENT APPLICATION

(11) **EP 4 477 372 A1**
(43) Date of publication of application: **18.12.2024**
(21) Application number: 24182224.6
(22) Date of filing: 14.06.2024
(51) Int. Cl.: B27N 3/00, B27N 1/00, B27N 3/04, B27N 3/12, E04B 1/74, B27N 3/08, E04C 2/16

(54) **DRY AND ROOM TEMPERATURE PROCESS FOR RECYCLING WOOD FIBER BASED MATERIALS**

(30) Priority: 16.06.2023 BE 202305496; 16.06.2023 US 202363521543 P
(71) Applicant: Take Out S.r.l., 6840 Neufchateau (BE)
(72) Inventor: BOLS, Christian-Marie, 1348 Louvain-la-Neuve (BE); WUILLAUME, Jean-François, 1325 Chaumont-Gistoux (BE)
(74) Representative: Kirkpatrick

(57) **Abstract**

The invention provides a method for recycling material, such as rigid panels or soft board, based on natural fibers comprising grinding the board at room temperature and atmospheric pressure, by exclusively mechanical action to obtain bulk fibers. In some cases, the rigid board to be recycled may undergo a mechanical pre-treatment step of destructuration/deplanarisation prior to grinding.

## Description

The invention relates to the recycling of materials, and more particularly pre- or post-consumer wood fiber panels to manufacture new objects that meet the standards of the circular economy.

It was in the 1920s that the manufacture of panel based on pressed wood fibers was invented and developed. Fresh/virgin wood chips are baked for 3 to 7 minutes under a pressure of 6 to 10 bars saturated steam at temperatures of 175 to 195°C, then defibrated when still hot and moist in an attrition defibrator to form fibers 0.5 to 10 mm long and 1 to 100 micrometers in diameter. The fibers are then dispersed in a water tank, recovered on a conveyor belt in the form of a mattress, drained, then pressed, and baked at high temperature to form fiber panels or fiberboards like soft- or hardboard. This so-called "wet" manufacturing process is still used but has the disadvantages of a final product of low quality (mechanical and water resistance), of being very energy-intensive, but above all of polluting in terms of effluents and atmospheric emissions.

In 1965, the so-called "dry" process was introduced. The preparation of the fibers remains the same but, after defibration, they are glued and dried (hot air dryer 250 to 300 °C) before forming the mattress (dry this time: water content < 10%), before pressing at high temperature (150 to 225 °C). This type of line does not produce liquid effluents after defibration but remains very energy-intensive and emissive in terms of gases released into the environment. The use of synthetic adhesives has allowed the development of panels with much higher mechanical and aesthetic qualities compared to the first generation: flexible/soft panels, low, medium, or high density rigid panels. It is important to note that pressed fiberboards - particularly for rigid ones -, although renowned for their anisotropic quality, are actually quite inhomogeneous. Indeed, hot and unidirectional pressing induces the formation of two very dense outer faces (up to 1.2 g/cm³) and from these a decreasing density towards the center of the panel (0.5 to 0.6 g/cm³). The density of the material being directly correlated with its internal cohesion.

A modelling study of energy consumption on a "dry" MDF (medium density fiberboard) production line has shown that the preparation steps up to defibration consume 30%, drying consumes 50%, and finally pressing 20% of the whole energy consumed on the line (Li and Pang, 2006).

Wood defibration units, whether followed by a "wet" or "dry" process of mattress formation, allow the production of flexible panels used for insulation or rigid panels having various mechanical, fire, and moisture resistance properties for use in insulation, furniture, layout, and construction. It should be noted that another product can be manufactured on such lines, it is the bulk of loose-fill insulation wood fibers used mainly for blowing insulation in hollow walls, attics, or wet projection on the inside of building walls. These are the same fibers produced for the panels. Once dried, compacted into bales and packaged, they are sold on the bio-based insulation market. This product made of trees is in competition and has the same use as cellulose wadding obtained exclusively from recycled paper and cardboard processed dry in one or several shredders and/or mill attrition defibrator. Cellulose fibers are known to be easily obtained from paper and cardboard as the raw material is thin and flexible: paper sheet and cardboard. The scarcity and price of used paper and cardboard triggered the development of bulk fibers made of fresh wood by wood fiber board production plants.

It is estimated that the energy required to produce one ton of bulk wood fiber is 20% less than the energy required to produce one ton of MDF or other fiberboard because there is no need for pressing energy. In Li *et al* (2006), the estimated total electricity consumption is 420 kWh/T and 1300 kWh/T of heat for each ton of panel produced. On such a line, bulk fiber production is expected to consume 330 kWh/T of electricity and 1040 kWh/T of heat. These data coincide with the generally recognized amount of grey energy for insulating bulk wood fiber from 1000 to 1400 kWh/T. Most of the heat is required for the evaporation of the water present in the fresh fibers (50 to 55% water in fresh wood). Another part of the heat is used for cooking the wood chips, in order to soften them, and to reduce the electrical energy required for the defibrator.

Engineering science describes six types of mechanical actions in all grinding processes: particle impact grinding on the tool, tool displacement grinding on the particle, particle impact grinding, tool crushing grinding, shear grinding, and attrition grinding with the tool.

The defibrator is mainly based on the principle of grinding by attrition to obtain a sufficient fraction of long fibers with insulating qualities or good mechanical resistance for the future panel, but at the cost of large energy losses by shearing and friction. Energy consumption per ton of fiber produced can be estimated between 100 and 150 kWh/T for attrition defibration (Hua *et al,* 2012). The defibrator represents a significant investment and generally determines the maximum production capacity of a line.

The aesthetic and anisotropic qualities of wood fiber panels have allowed this industry to grow to reach an overall global annual production volume of more than 100 million tons. The lifespan of the product depends on the sector concerned: short for the layout, medium for the furniture, and the longest for the construction. An average lifespan of about 15 to 20 years is generally accepted. These volumes form the post-consumer part of fiberboard waste. Pre-consumer by-product/wastes comes from production declassification, trading, and cutting scraps during the transformation of panels.

In Europe, pre- and post-consumer end of life fiberboards and loose-fill wood and cellulose fibers are collected and form a share of 5 to 15% (Nguyen *et al,* 2023) of class B or 2 wood (nontoxic treated wood). The majority of end of life fiberboard and loose-fill insulation is burned and turned into energy. The aminoplast resins (urea-formaldehyde and urea-melamine-formaldehyde) used to glue the fibers into panels contains high concentration of nitrogen (urea and melamin) inducing when burned high nitrogen oxide (NOx) emissions: 30 to 40 times higher than untreated wood during combustion (Sartor *et al,* 2014).

Although research is quite active to find sustainable novel technologies to recycle fiberboard or loose-fill into material, industrial application is very marginal.

Given the decrease in forest resources and the responsibility of the sector to manage the volume of waste generated, various research has been undertaken to find new alternatives to recycle fiberboard and, if possible, as a raw material to manufacture new fiberboard as has been done grinding waste of OSB, of chipboard, etc...

All the panel grinding treatment trials (only mechanical) generated too many fines and too few long fibers that could be reused for panel manufacturing.

This is why all the processes studied or patented more recently are hydro-thermo-mechanical to minimize fines and increase the ratio of long fibers. In the same time, since the 1920s, the evolution of techniques tends to minimize the amount of water used to reduce the volume of effluents and their toxicity, but also the waste of energy to evaporate water from the fibers, a reduction in temperature and pressure to limit the energy applied (and reduce gaseous emissions), and the reduction of the addition of expensive chemical reagents, even toxic.

It is commonly accepted that fibers recycled by these processes can only substitute a minority share - well below 25% - of virgin fibers obtained from fresh wood without negatively impacting the mechanical qualities of the panels (Nguyen *et al,* 2023). In IT201900014682A1, the incorporation of recycled hydro-thermo-mechanical wood fibers can be increased by forming a three layers board using two fiber production lines with recycled fibers only in the center of the board.

Indeed, recycled fibers are shorter and glue residues reduce compatibility with fresh glue impacting the mechanical strength of the panels. On the other hand, clogging the pores of the recycled fiber with glue residues helps increase water resistance and reduces formaldehyde emission.

Previous disclosures therefore concern a recycling process based on hydro-thermo-mechanics:
- US3741863A targets landfill waste recycling and uses steam.
- WO1996033309A1 and WO2021225491A1 refer to the use of steam water and an attrition defibrator.
- WO2021176326A1 requires wetting with liquid water, possible reagents, high-pressure steam cooking, and possible use of an attrition defibrator.
- WO2023/158366A2, FR3133547A1, SE2250551A1, WO2021112749A1 and WO2003026859A1 avoid/minimize the wetting step and recommend mechanical treatment before steam explosion.
- WO2005007968A1 requires soaking in water and the use of electromagnetic radiation followed by brewing.
- EP2516730A1 describe grinding, followed by ohmic soaking/heating before a steam explosion.
- WO2001039946A1 and DE4224629A1 consist of modifying the operating parameters of the cooker and defibrator of a conventional fiberboard production installation.
- CN116901203B describe a mechanism based on extrusion screw to separate adhesives during the cutting on a board production line.
- DE102009042362A1 describe an improvement of a board production line allowing the use of shredded paper and cardboard as raw material.

Other documents deal solely with the design of defibrators, all based on the principle of attrition whose use can be in the defibration of fresh wood chips or various recycled materials including or not textile, clothes, leather...: WO2019035754A1, RU2665100C1, EP2559808B1, CN111910460B, CN104343034B, JP7254401B1.

EP3778220A1 and DE102021004876A1 concerns an MDF board whose fibers from fresh wood would constitute the surfaces of the panel and hydro-thermo-mechanically obtained recycled fibers would be used only for the core of the panel to limit the decrease in mechanical and aesthetic performance on the surface of the panel. Similarly, AT526148B1 describe a board with recycle wood in the inner layer and externals with veneer panels.

The problem is therefore that shredding waste panels destroys too many fibers, and that hydro-thermo-mechanical treatments are very energy-intensive and can only substitute a minority share of virgin fibers.

It was therefore considered necessary to propose new and more energy-efficient solutions for recycling wood fiber and wood fiber panels into materials.

### Solution of the invention

The present invention provides a new, eco-efficient, and unexpected solution for the material recycling of wood fiber materials like loose-fill insulation material and any material containing wood fibers, like board such as softboard, but particularly rigid material like hardboard, LDF, MDF, HDF, and for obtaining free wood fibers usable as raw material to produce new materials with an incorporation rate of up to 100%.

Surprisingly, it has been observed that it is not necessary to implement one or a combination of the following techniques in order to obtain recyclable free fibers out of rigid material:
- a solvent or liquid, aqueous or other reagents, alone or in mixtures, or containing solutes and other compounds;
- water vapor or other compounds, alone or in mixtures in the gas phase;
- heat, whether in the form of ohmic resistance, electromagnetic radiation, steam, or other and greater than the ambient heat of the production room (0 to 40 °C);
- pressure conditions below or above atmospheric pressure;
- mechanical treatment based on the principle of attrition with the tool.

The invention relates to a method of recycling rigid material based on natural fibers comprising grinding the rigid material at room temperature and atmospheric pressure, by exclusively mechanical action to obtain bulk fibers.

The invention thus consists in applying to pre- or post-consumer by-product/waste of wood fiber containing material like, but not limited to, fiberboards at temperature and ambient pressure, without any addition of liquid, solid, or gaseous products, a grinding technology based on one or more of the six types of mechanical actions, but without necessarily resorting to the attrition technique.

The rigid or board material based on natural wood fibers preferably designates a panel (i.e. rigid, and having for example a thickness between a few millimeters and a few centimeters) or any other material made of wood fibers. A paper, cardboard, textile, leather, or fabric is not considered a board within the meaning of the invention.

The term board or panel in the context of the invention refers to any piece of board or panel that is either industrial manufacturing waste or post-use waste. So, it's not necessarily a whole panel.

The rigid material based on wood fibers may also have any shape and is not necessarily a flat panel. It can be a decorative object or an object molded with a specific form.

Natural fibers here are preferably fibers comprising lignin and/or hemicellulose. It can be wood fibers, or other natural fibers such as, but not limited to, flax, hemp, cotton, rice, corn, all straws, or a mixture of fibers.

Bulk fibers are loosened fibers, separated from each other. Bulk fibers are known for their insulating properties and can advantageously be used either in bulk or to form insulating materials, or new objects.

The grinding of the rigid material, by exclusively mechanical action, is preferably non-shearing, that is to say that it does not include a tool or step consisting in cutting the fibers.

The grinding of the rigid material, by exclusively mechanical action, preferably comprises an impact grinding step.

Grinding is typically carried out using at least one mill or crusher. It may include, for example, the use of a slow roller mill, with or without pins or teeth, and/or a fast mill such as a hammer mill that provides a superior and unexpected fiber throughput and quality.

This includes, for example, the passage of the rigid material through a hammer crusher or crusher. Hammer crushers are well known to those skilled in the art. Depending on the scale of work, the initial material, the type of crusher may vary. Generally, hammers are operated in a drum so as to impact the pieces of the sheet until they have reached a size allowing them to pass through a grid arranged on the periphery of the drum. The mesh of this grid defines the size of the desired bulk fiber network at the end of the process.

Preferably, depending on the characteristics of desired fibers at the end of the process, grinding is carried out in one or more steps, that is to say that several successive crushing steps can be applied, with grids having different meshes, i.e., finer and finer, to obtain at each step finer fibers.

Ambient temperature means that no heating is applied. Typically, the ambient temperature is between 0 °C and 30 °C, preferably between 5 °C and 25 °C.

The process is based on the use of a deplanariser and one or more grinders, possibly of different types in series or in parallel to gradually reduce the rigid material to the desired characteristics. This action is only possible and valid for rigid material, excluding non rigid material like for example paper sheets or cardboard.

With the method of the invention, pre- or post-consumers board can be directly processed into fibers without any other treatment like the one described in the previous art.

For example, when the material is a rigid wood fiber panel, it is not homogeneous, the core of the panel is usually softer than the outer faces.

It can be advantageous to deplanarise the material before grinding, i.e., to apply constraints to crack it, delaminate it, and thus create "flakes or scales". For example, a 2 cm thick panel can be cracked into scales with a thickness of about 1 to 2 mm.

Such treatment makes it possible to significantly increase the flow rate of grinding with low energy consumption. It also makes it possible to limit "fine" or wood dust, and increase the length of the recovered fibers.

The invention also relates to bulk fibers obtained according to the method of the invention. These fibers are of very high quality, which gives them excellent insulating properties.

The bulk fibers obtained by the method of the invention preferably have a thermal conductivity measured by fluxmetry according to EN 12667 between 0.010 and 0.055 W/m.K, preferably between 0.020 and 0.049 W/m.K.

The invention finally covers the use of bulk fibers of the invention to manufacture a new material or a new object.

This includes any object made from wood fiber like bulk loose fibers, as much as flexible or rigid panels used for insulation, structure, decoration (furniture, layout, construction, packaging, toys ...), any other object pressed and/or glued, hot or cold, with any type of binder, resin, mineral, or organic glue, monofiber or composite.

As a result, the grey energy content of the fibers produced is very low compared to market equivalents and not achieved by the techniques already described.

The invention will be better understood using the examples below, which do not intend to limit the scope of the invention, with reference to drawings on which:

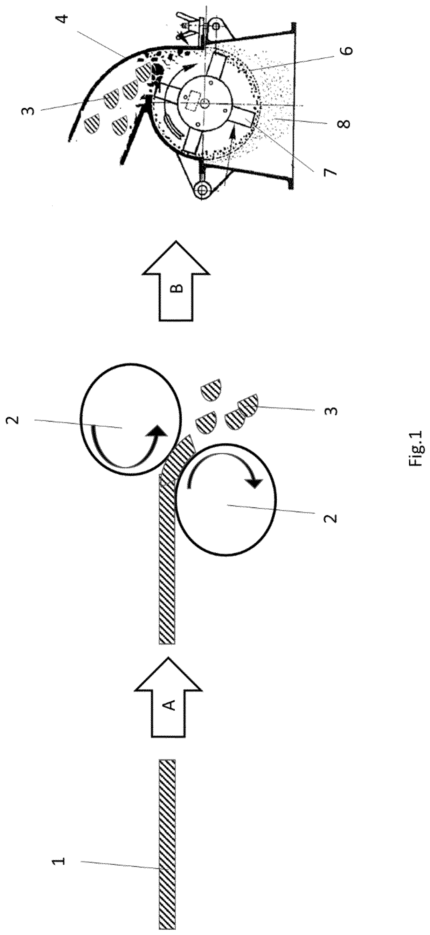

- Figure 1 is a diagram of the method of the invention.

With reference to Figure 1, the recycling method of an MDF panel 1 (or portion of panel) includes a step A of mechanical treatment of destructuration/deplanarisation, here the passage between two rollers 2 causes the deplanarisation of panel 1 to form scales 3. These scales 3 are then introduced, in step B, into a crusher 4 comprising hammers 7 rotating in a cylinder surrounded by a grid 6, having a certain mesh allowing escape the fibers 8 which are small enough to cross the mesh. Panel 1 is thus converted into 8 fibers at room temperature and atmospheric pressure, by exclusively mechanical action to obtain bulk fibers.

### Example 1

### Recycling of post-consumer bulk MDF of wood fibers

Pieces of four end-of-life MDF panels (see table below) were treated according to the method of the invention.

They were first subjected to a mechanical stress of deplanarisation by passing between two metal slow rollers of 20 cm in diameter, lined with teeth, and causing a curved trajectory resulting in the formation of cracks into and on the surface of the material and the formation of MDF scales. The speed of the rollers of the deplanarisation machine is between 1 and 60 rotations per minute, and preferably between 1 and 15 rotations per minute.

The scales obtained are then defibrated with a hammer mill, lined with a 4 mm grid, of the type used for defibrating straw and other agricultural materials. The measured production rate for the four samples were of the order of 1000 kg/h.

| | Panel Producer | reference | Thickness and density | Type of glue |
|---|---|---|---|---|
| 1 | Unilin | MDF Pure | 18 mm, 720 kg/m³ | p MDI |
| 2 | Unilin | MDF Standard Fibrabel | 38 mm, 600 kg/m³ | Urea - Formaldehyde |
| 3 | Valchromat | Tinted MDF-Black | 30 mm, 740 kg/m³ | Urea-formaldehyde -melamine |
| 4 | Valchromat | Tinted MDF-Black | 8 mm, 850 kg/m³ | Urea-formaldehyde -melamine |

### Example 2 - Thermal conductivity

The thermal conductivity was measured according to the method described in EN 12667 (2001). The equipment is calibrated using a certified reference material of type IRMM-440. It is a glass wool plate (identification number 4) 600 mm x 600 mm and 34.35 mm thick.

In short, the fibers are contained in a wooden frame with an internal dimensions of 566 mm x 566 mm and a height of 101 mm. This constitutes the test tube.

The test piece was dried in a ventilated oven at 70 °C to constant mass, after which it was conditioned at 23 °C ± 2 and 50% rh ± 5 to constant mass. Before the test, the test piece was completely surrounded by plastic sheets (0.15 mm total thickness).

The equipment used (CSTC number: HFM1) is a fluxmeter type device, symmetrical configuration with a single specimen. The dimensions of the device are 600 mm x 600 mm. The measurements are made with the specimen in a horizontal position, which is placed between the two fluxmeters (hot side below and cold side above).

The thermal conductivity of fibers obtained from UNILIN MDF PURE (Example 1, table here above) is 0.03994 W/(m.K) for an average temperature of 9.98 °C for a dry density of 50.3 kg/m³.

### Example 3 - Density of recycled wood fiber loose-fill insulation material

Test specimens in frames were produced in accordance with the method defined below:
- Use of a pneumatic blowing machine connected to a 40 m long pipe, smooth inside, 63 mm in diameter. The blowing machine is loaded with enough material to obtain a homogeneous flow throughout the blowing period. The feed is carried out from a bag of bulk fibers without separation of the lumps either manually or mechanically. Indeed, the fibers may have a tendancy to agglomerate into small lumps, it was found that it is not necessary to break these lumps to obtain satisfactory results.
- When starting the blowing machine, the end of the pipe is pointing outside the test specimen frame.
- Once the flow of the blowing machine is regular, the end of the pipe is sweeped slowly and regularly from one side of the frame to the other, exceeding the two edges of the test piece frame by approximately 0.5 m.
- The blowing pipe is kept horizontal at a height of 0.8 m to 1.1 m from the upper edge of the large frame with the insulation material falling to the center of the frame.
- The blowing distance must be at least 2.5 m from the edge of the large frame, and such that the insulation falls to the center of the frame

Filling the frame in two stages: when the frame is half full, stop blowing and rotate 180°, then the rest of the frame is filled up using the procedure previously indicated. - Leveling of the surface of the test piece by lightly sweeping it using a rigid, thin plastic sheet without causing any settling. Then, the test specimens are weighted.

According to fiberboard type and processing setup observed of density of the loose-fill wood fibers may vary from 15 to 200 kg/m3.

### Example 4 - Process energy consumption

A mix of MDF cuts weighting 2866 kg has been processed according to the method of the invention using a slow rotating deplaniriser (10 RPM), followed by two hammer mills in serie. The consumption of energy for the production of loose-fill fibers is as low as 32 kwh/Ton, compared with 100-150 kwh/Ton when using conventional attrition mill. The properties of the loose-fill wood fiber obtained are the following: density 59,0 kg/m³ and dry thermal conductivity 0.03729 W/(m.K) for an average temperature of 9.98 °C.

### References

K. Sartor, Y. Restivo, P. Ngendakumana, P. Dewallef: Prediction of SOx and NOx emissions from a medium size biomass boiler. , vol.25, June 2014, pages 91-100.
Nguyen, D., Luedtke, J., Nopens, M. et al. Production of wood-based panel from recycled wood resource: a literature review. Eur. J. Wood Prod. 81, 557-570 (2023).
Li, J., Pang, S. (2006) Modelling of Energy Demand in an MDF Plant. Auckland, New Zealand: CHEMECA 2006, 17-20 Sep 2006. Conference Proceedings of CHEMECA 2006: Knowledge and Innovation, 6pp.
Energy demand in wood processing plants
   - J. Li, M. McCurdy, S. Pang
   - Published 2006
   - Materials Science, Engineering
Hua, J., Chen, G., Xu, D., and Shi, S. Q. (2012). "Impact of thermomechanical refining conditions on fiber quality and energy consumption by mill trial," BioRes. 7(2), 1919-1930.

## Claims

1. A method of recycling a rigid material based on natural fibers comprising the grinding of the rigid material at room temperature and atmospheric pressure, by exclusively mechanical action to obtain bulk fibers.

2. Method according to claim 1, wherein the grinding is non-shearing.

3. Method according to one of claims 1 and 2, wherein the grinding comprises an impact grinding.

4. A method according to claim 3, wherein the impact grinding is carried out using a hammer crusher.

5. A method according to one of claims 1 to 4, wherein the natural fiber-based rigid material is a wood fiber board.

6. A method according to one of claims 1 to 5, wherein the grinding comprises several successive crushing steps.

7. A method according to one of claims 1 to 6 wherein the natural fibers are fibers comprising lignin and/or hemicellulose.

8. A method according to one of claims 1 to 7 further comprising a mechanical treatment step of destructuration/deplanarisation prior to grinding.

9. Bulk fibers obtained by the method according to one of claims 1 to 8.

10. Bulk fibers according to claim 9, having a thermal conductivity measured by fluxmetry according to EN 12667 between 0.010 and 0.055 W / m.K.

11. Bulk fibers according to claim 9 or 10 having a density comprised between 15 and 200 kg/m³.

12. Insulation material comprising bulk fibers according to one of claims 9 to 11.

13. Use of bulk fibers according to one of claims 9 to 11 to manufacture a new material or article.

14. Use according to claim 13 of bulk fibers mixed with other fibers, such as other wood fibers.

15. Use according to one of claims 13 to 14, wherein the new material or the new object is a flexible or rigid insulation panel, a decorative element, an object pressed and/or hot or cold glued optionally comprising a binder, resin, mineral, or organic glue, unifiber or composite.
